# EUROPEAN PATENT APPLICATION

(11) **EP 1 876 046 A1**
(43) Date of publication of application: **09.01.2008**
(21) Application number: 06731739.6
(22) Date of filing: 13.04.2006
(51) Int. Cl.: B60J 5/04, B60J 10/08

(54) **DOOR FRAME FOR VEHICLE**

(30) Priority: 25.04.2005 JP 2005126929
(71) Applicant: AISIN SEIKI KABUSHIKI KAISHA, Kariya-shi, Aichi-ken 448-8650 (JP)
(72) Inventor: TAKEUCHI, Katsuhiko c/o AISIN SEIKI KK, Aichi 4488650 (JP); YAMASAKI, Hiroaki c/o AISIN SEIKI KK, Aichi 448-8650 (JP)
(74) Representative: Albutt, Anthony John
(86) International application number: PCT/JP2006/307803
(87) International publication number: WO 2006/115063

(57) **Abstract**

A first fitting portion of a vehicle door frame is formed to enable attachment of a bending-type door weather strip including a lip thereto. A second fitting portion is formed to enable attachment of a parting weather strip thereto. A first seal surface is formed to enable the lip to be pressed thereagainst. A second seal surface is formed to enable attachment of an opening weather strip thereto, which is attached to a vehicle body inward relative to the vehicle from the door weather strip. The second fitting portion includes a bottom wall portion and an engagement piece that is folded back from the bottom wall portion at one side end of the bottom wall portion. The parting weather strip is engageable with the engagement piece. The first fitting portion includes the side end and a wall that is arranged at a rear side of the bottom wall portion. The wall is formed so that the side end projects toward the wall. Accordingly, the number of processing steps when rolling the door frame rolling process is prevented from increasing, and the door frame obtains a high sealing capacity and ornamentality.

## Description

### TECHNICAL FIELD

The present invention relates to a door frame for a vehicle.

### BACKGROUND ART

Patent Document 1 describes an example of a door frame for a vehicle in the prior art. The vehicle door frame includes a door frame body (1), which is formed by bending a metal plate, and an exterior design member (17), which is formed by bending another metal plate. The vehicle door frame has a cross-section including a door weather strip fitting portion (31), to which a door weather strip (12) is attached, a glass channel (30), to which a glass run (8) is attached, and a parting weather strip fitting portion (32), to which a parting weather strip (21) is attached.

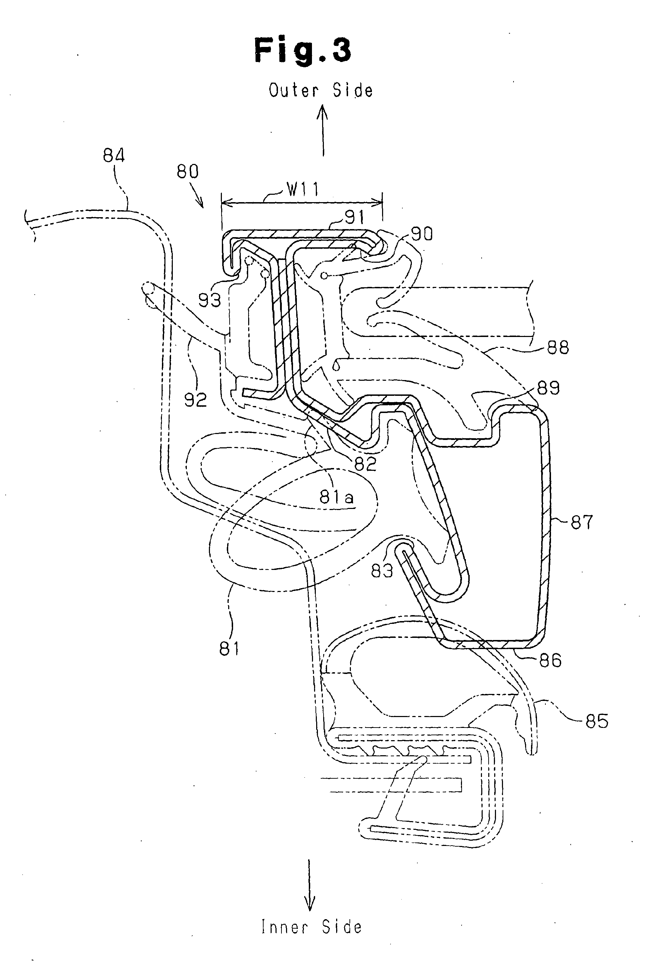

Fig. 3 shows another example of a vehicle door frame proposed in the prior art and formed by bending (rolling) a single metal plate. The vehicle door frame 80 has a cross-section including a door weather strip seal surface 82, against which a lip 81a of a door weather strip 81 is pressed, a door weather strip fitting portion 83, to which the door weather strip 81 is attached, an opening weather strip seal surface 86, against which an opening weather strip 85 attached to a vehicle body 84 is pressed, an interior ornamental portion 87, a glass run fitting portion 89 and a glass channel 90, to which a glass run 88 is attached, an exterior ornamental portion 91, and a parting weather strip fitting portion 93, to which a parting weather strip 92 is attached. The door weather strip seal surface 82, the door weather strip fitting portion 83, the opening weather strip seal surface 86, the interior ornamental portion 87, the glass run fitting portion 89, the glass channel 90, the exterior ornamental portion 91, and the parting weather strip fitting portion 93 are formed integrally.

Patent Document 1: Japanese Laid-Open Patent Publication No. 11-334367 (Fig. 1)

### DISCLOSURE OF THE INVENTION

The vehicle door frame 80 includes many folded portions and has a complicated cross-sectional shape. This increases the number of steps required in the rolling process. As the number of processing steps increases, the number of roll molds used in these steps and the number of roll mold pieces that form each of the roll molds (roll stages) increases accordingly. This may affect the production preparation period and the precision management for the points described below:
the cost of the molds increases as the processing steps (roll stages) increases;
the factory space for the rolling process increases as the processing steps in the rolling process (roll stages) increases; and
time is required for obtaining the required precision and making the necessary adjustments as the processing steps in the rolling process (roll stages) increases, and operators (maintenance crew and the like) that obtain the required precision and make the necessary adjustments are required to have high skill.

It is an object of the present invention to provide a vehicle door frame having a high sealing capacity and superior ornamentality while preventing the number of processing steps in the rolling process from increasing.

To achieve the above object, the present invention provides a vehicle door frame formed by rolling a metal plate so that the door frame has a cross-section including a first fitting portion, a second fitting portion, a first seal surface, a second seal surface, a glass channel, and an exterior ornamental portion that are formed integrally. The first fitting portion is formed to enable attachment of a bending-type door weather strip including a lip thereto. The second fitting portion is formed to enable attachment of a parting weather strip thereto. The first seal surface is formed to enable the lip to be pressed thereagainst. The second seal surface is formed to enable attachment of an opening weather strip thereto. The opening weather strip is attached to a vehicle body inward relative to the vehicle from the door weather strip. The glass channel is formed to enable attachment of a glass run thereto. The second fitting portion includes a bottom wall portion and an engagement piece that is folded back from the bottom wall portion at one side end of the bottom wall portion. The parting weather strip is engageable with the engagement piece. The first fitting portion includes the side end and a wall that is arranged at a rear side of the bottom wall portion, and the wall is formed so that the side end projects toward the wall.

### BRIEF DESCRIPTION OF THE DRAWINGS

Fig. 1 is a cross-sectional view of a vehicle door frame according to a preferred embodiment of the present invention;
Fig. 2 is a schematic diagram of a vehicle door that includes the vehicle door frame of Fig. 1; and
Fig. 3 is a cross-sectional view of a prior art vehicle door frame.

### BEST MODE FOR CARRYING OUT THE INVENTION

A preferred embodiment of the present invention will now be described with reference to the drawings.

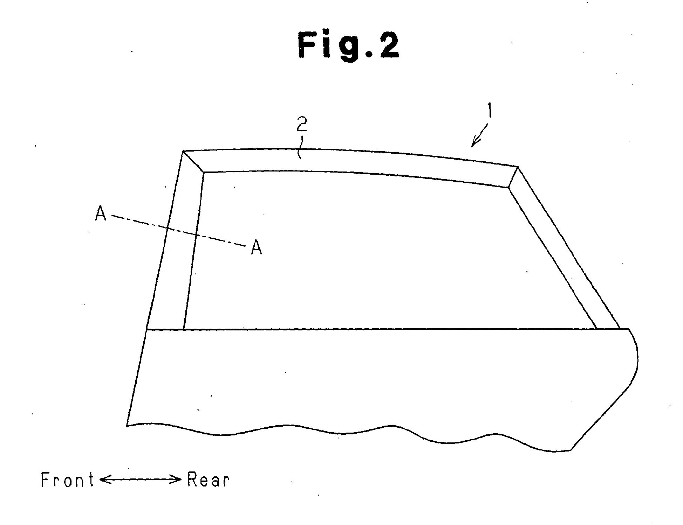

Fig. 2 is a schematic diagram of a door 1 for a vehicle, such as an automobile, to which the present invention is applied. As shown in the drawing, the vehicle door 1 includes a door frame 2. The door frame 2 is substantially channel-shaped along the outer upper portion of the vehicle door 1.

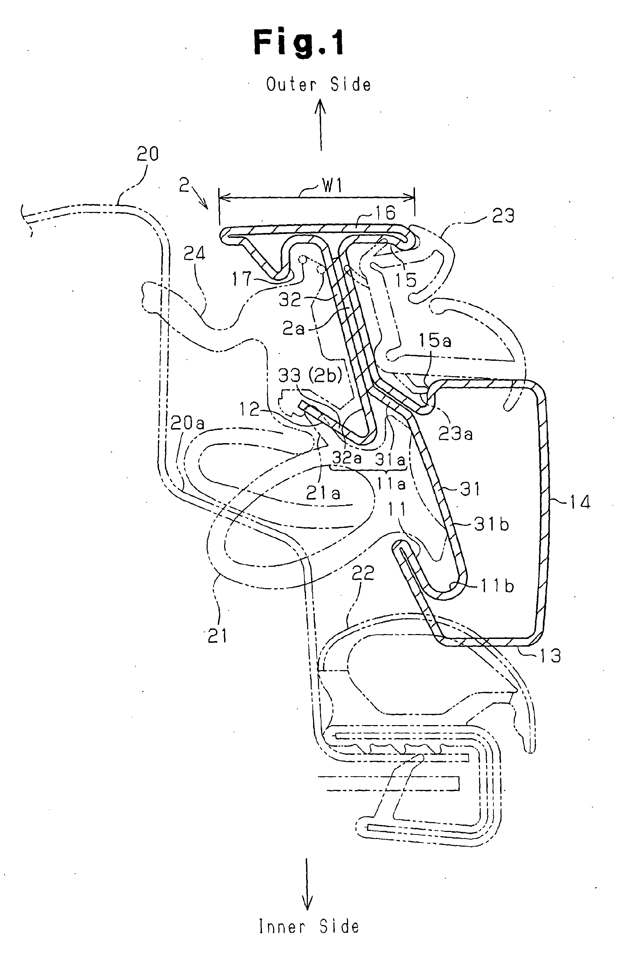

Fig. 1 is a cross-sectional view of the door frame 2 taken along line A-A of Fig. 2. As shown in Fig. 1, the door frame 2 is formed by rolling a single metal plate. The cross-section of the door frame 2 includes a first fitting portion 11, which functions as a door weather strip fitting portion, a first seal surface 12, which functions as a door weather strip seal surface, a second seal surface 13, which functions as an opening weather strip seal surface, an interior ornamental portion 14, a glass channel 15, an exterior ornamental portion 16, and a second fitting portion 17, which functions as a parting weather strip fitting portion. The first fitting portion 11, the first seal surface 12, the second seal surface 13, the interior ornamental portion 14, the glass channel 15, the exterior ornamental portion 16, and the'second fitting portion 17 are formed integrally. The metal plate that is used to form the door frame 2 includes a first end piece 2a and a second end piece 2b. The metal plate is rolled from the first end piece 2a toward the second end piece 2b to form the first fitting portion 11, the first seal surface 13, the interior ornamental portion 14, the glass channel 15, the exterior ornamental portion 16, the second fitting portion 17, and the first seal surface 12 in the stated order.

The first fitting portion 11 extends from an outer side of the vehicle toward an inner side of the vehicle. The first fitting portion 11 has a C-shaped cross-section. An outer end of the first fitting portion 11 is bent to form a first engagement portion 11a. An inner end of the first fitting portion 11 is folded back to form a second engagement portion 11b. The first fitting portion 11 opens toward the vehicle body 20 (to the left in Fig. 1). A bending-type door weather strip 21 is hooked to and held by the first engagement portion 11a and the second engagement portion 11b. This attaches the bending-type door weather strip 21 to the first fitting portion 11. The door weather strip 21 is pressed against a contact surface 20a of the vehicle body 20 while the door weather strip 21 is being bent and deformed. This enables the door weather strip 21 to have a higher sealing capacity than a compression-type door weather strip.

A compression-type door weather strip has an unstable form (elastic deformation) when pressed against the vehicle body. Thus, the compression-type door weather strip has lower sealing capacity. To compensate for this drawback, the compression-type door whether strip needs to be accurately attached to the vehicle body. The compression-type door weather strip typically tends to be larger than the bending-type door weather strip. This increases the material cost.

The first seal surface 12 extends continuously from an open end of the first fitting portion 11 at the outer side of the vehicle and is then folded back to the outer side of the vehicle. The door weather strip 21 has a first lip 21a. The first lip 21a is pressed against the first seal surface 12 by a repulsion force generated when the door weather strip 21 is bent and pressed against the contact surface 20a.

The second seal surface 13 extends continuously from an open end of the first fitting portion 11 at the inner side of the vehicle and is then folded so as to straightly extend away from the vehicle body 20 (to the right in Fig. 1). An opening weather strip 22 is attached to the vehicle body 20 inward from the door weather strip 21. The opening weather strip 22 is pressed against the second seal surface 13.

The interior ornamental portion 14 extends continuously from the second seal surface 13 and straightly from the inner side toward the outer side of the vehicle. The interior ornamental portion 14 forms an ornamental interior surface of the vehicle body 20.

The glass channel 15 has a channel-shaped cross-section that opens in a direction opposite the vehicle body 20 (to the right in Fig. 1). An open end of the glass channel 15 at the inner side of the vehicle extends continuously to the interior ornamental portion 14. The glass channel 15 has a third engagement portion 15a, which is bent along the rear surface of the first engagement portion 11a of the first fitting portion 11. A glass run 23 is attached to the glass channel 15. The glass run 23 has a second lip 23a. The second lip 23a is engaged with the third engagement portion 15a. This holds the glass run 23. A peripheral portion of a glass window (not shown) slides along the glass run 23. The opening of the glass channel 15 has a width that is optimized so as to prevent the glass window that slides along the glass run 23 from being separated from the glass run 23.

The exterior ornamental portion 16 has a cross-section that extends straightly continuous to an open end of the glass channel 15 at an outer side of the vehicle. The exterior ornamental portion 16 forms an exterior ornamental surface.

The second fitting portion 17 has a C-shaped cross-section. The second fitting portion 17 has two ends at the outer side and inner side of the vehicle that are folded back, and the second fitting portion 17 opens toward the vehicle body 20 (toward the left in Fig. 1). The folded portion of the second fitting portion 17 at the outer side of the vehicle extends continuously to the exterior ornamental portion 16. More specifically, the second fitting portion 17 and the glass channel 15 are adjacent to each other and open in opposite directions. A parting weather strip 24 is attached to the second fitting portion 17. The parting weather strip 24 suppresses wind noise and improves the outer appearance.

The door frame 2 is formed by a single metal plate that has the first end piece 2a and a second end piece 2b. The first end piece 2a, which is arranged between the glass channel 15 and the second fitting portion 17, extends from the outer side toward the inner side of the vehicle. A wall 31, which forms part of the first fitting portion 11, extends continuously from an inner end of the first end piece 2a. The wall 31 includes an inclined portion 31a and a first bottom wall portion 31b, which extends continuously from the inclined portion 31a and from the outer side toward the inner side of the vehicle. The first bottom wall portion 31b extends continuously to the second engagement portion 11b. The inclined portion 31a is bent from the first end piece 2a and extends from the outer side toward the inner side of the vehicle and away from the vehicle body 20 (toward the interior ornamental portion 14, or to the right in Fig. 1). The inclined portion 31a extends along the third engagement portion 15a of the glass channel 15. The inclined portion 31a is continuous with the first end piece 2a at an obtuse angle and with the first bottom wall portion 31b at an obtuse angle. More specifically, the part between the inclined portion 31a and the first end piece 2a is bent at an obtuse angle and the part between the inclined portion 31a and the first bottom wall portion 31b is bent at an obtuse angle.

The second fitting portion 17 includes a second bottom wall portion 32 and an engagement piece 33. The second bottom wall portion 32 extends from the outer side toward the inner side of the vehicle in contact with the first end piece 2a. The engagement piece 33 is folded back at one side end 32a of the second bottom wall portion 32, which is the end located at the inner side of the vehicle. The engagement piece 33 corresponds to the second end piece 2b of the metal plate forming the door frame 2. The side end 32a of the second bottom wall portion 32 projects toward the wall 31 located of the first end piece 2a (toward the inner side). More specifically, the wall 31 arranged at the rear side of the second bottom wall portion 32 is formed so that the side end 32a projects from the inclined portion 31a. As a result, the first engagement portion 11a of the first fitting portion 11 is formed by the inclined portion 31a and the side end 32a. The rear surface of the second fitting portion 17 refers to the side facing away from the vehicle body 20 with respect to the second bottom wall portion 32 (right side in Fig. 1) that faces the vehicle body 20 (to the left in Fig. 1).

The parting weather strip 24 is held by the engagement with the engagement piece 33. The engagement piece 33 has the first seal surface 12, against which the first lip 21a of the door weather strip 21 is pressed.

The preferred embodiment has the advantages described below.
(1) The first engagement portion 11a, which is part of the first fitting portion 11, is formed by the inclined portion 31a of the wall 31 and the side end 32a of the second bottom wall portion 32 that projects toward the inner side of the vehicle with respect to the inclined portion 31a. More specifically, part of the first fitting portion 11 (the first engagement portion 11a) is formed by the second fitting portion 17. This simplifies the cross-sectional shape of the door frame 2 as compared with when the first fitting portion 11 is formed independently, and reduces the number of processing steps in the rolling process.
   The door frame 2 includes the first fitting portion 11 and the second seal surface 13. The door frame 2 uses the bending-type door weather strip 21 having a high sealing capacity. Further, the door frame 2 has a double seal structure formed by the door weather strip 21 and the opening weather strip 22, which is arranged inward from the door weather strip 21. This improves the sealing capacity of the door frame 2.
   The door frame 2 includes the door weather strip 21 and the parting weather strip 24, which are substantially separate members and arranged independently of each other. The door weather strip 21 and the parting weather strip 24 are arranged next to each other in the vertical direction as viewed in Fig. 1 (in the direction from the inner side toward the outer side of the vehicle). This enables the setting of the width W1 of the exterior ornamental portion 16 (refer to Fig. 1) without affecting the sealing capacity of the door weather strip 21. As a result, the width of the exterior ornamental portion 16 can be set more accurately, and the appearance as viewed from the outer side of the vehicle can be improved.
(2) The engagement piece 33 includes the first seal surface 12. In other words, the engagement piece 33 also functions as the first seal surface 12. This eliminates the need to independently form the first seal surface 12, simplifies the cross-sectional shape of the door frame 2, and reduces the processing steps in the rolling process.
(3) The third engagement portion 15a of the glass channel 15 is arranged at the rear side of the wall 31 (the inclined portion 31a), which forms the first fitting portion 11. The rear side of the wall 31 is the side facing away from the vehicle body 20 (to the right in Fig. 1) with respect to the first fitting portion 11, which opens toward the vehicle body 20 (to the left in Fig. 1). To form a space for accommodating the door weather strip 21, the first fitting portion 11 is preferably formed or arranged near the interior ornamental portion 14. Thus, the third engagement portion 15a, which is arranged at the rear side of the wall 31 (the side of the interior ornamental portion 14), is also formed or arranged near the interior ornamental portion 14. This shortens the length by which the interior ornamental portion 14 extends with respect to the glass channel 15 (the dimension of the interior ornamental portion 14 in the lateral direction of Fig. 1). Consequently, the glass run 23 is held in a more stable manner.
   Further, for example, the glass run fitting portion 89 is arranged separately from the glass channel 90 in the prior art structure (refer to Fig. 3). In contrast, the third engagement portion 15 shown in Fig. 1, which functions as a glass run engagement portion, is arranged in the glass channel 15. This further simplifies the cross-sectional shape of the door frame 2.
(4) The inclined portion 31a is continuous with the first end piece 2a and the first bottom wall portion 31b at obtuse angles. This enables the door frame 2 to be formed with fewer stages (roll stages).
(5) The reduction in the rolling steps (roll stages) improves the productivity of the door frame 2 and lowers the cost (cost for molds) of the door frame 2. This enables production preparation to be performed smoothly within a shorter period of time.

The above embodiment may be modified in the following forms.

In the above embodiment, the engagement piece 33 of the second fitting portion 17 may be formed by a middle part of a metal plate.

In the above embodiment, the inclined portion 31a may be folded with respect to the first end piece 2a or the first bottom wall portion 31b at a right angle or at an acute angle.

The cross-sectional shape of the door frame 2 may be changed without departing from the scope of the present invention.

The present invention is applicable to a front door or a rear door for a vehicle.

## Claims

1. A vehicle door frame formed by rolling a metal plate so that the door frame has a cross-section including a first fitting portion, a second fitting portion, a first seal surface, a second seal surface, a glass channel, and an exterior ornamental portion that are formed integrally, wherein the first fitting portion is formed to enable attachment of a bending-type door weather strip including a lip thereto, the second fitting portion is formed to enable attachment of a parting weather strip thereto, the first seal surface is formed to enable the lip to be pressed thereagainst, the second seal surface is formed to enable attachment of an opening weather strip thereto, the opening weather strip is attached to a vehicle body inward relative to the vehicle from the door weather strip, and the glass channel is formed to enable attachment of a glass run thereto, the door frame being **characterized in that**:
the second fitting portion includes a bottom wall portion and an engagement piece that is folded back from the bottom wall portion at one side end of the bottom wall portion, and the parting weather strip is engageable with the engagement piece; and
the first fitting portion includes the side end and a wall that is arranged at a rear side of the bottom wall portion, and the wall is formed so that the side end projects toward the wall.

2. The door frame according to claim 1, being
**characterized in that**:
the engagement piece includes the first seal surface.

3. The door frame according to claim 1 or 2, further being **characterized by**:
an interior ornamental portion extending continuously from an open end of the glass channel; and
wherein the glass channel has an engagement portion arranged at a rear side of the wall enabling engagement of the glass run therewith.

4. The door frame according to claim 1 or 2, being **characterized in that**:
the door weather strip and the opening weather strip form a double seal structure with the vehicle body and the door frame.

5. The door frame according to claim 1 or 2, being **characterized in that**:
the parting weather strip is arranged outward relative to the vehicle from the door weather strip.
